(19) Europäisches Patentamt
European Patent Office
Office européen des brevets

(11) **EP 2 608 064 A1**

(12) **EUROPEAN PATENT APPLICATION**
published in accordance with Art. 153(4) EPC

(43) Date of publication:
**26.06.2013 Bulletin 2013/26**

(51) Int Cl.:
**G06F 17/30** *(2006.01)*     **G06Q 30/00** *(2012.01)*

(21) Application number: **11818181.7**

(22) Date of filing: **15.08.2011**

(86) International application number:
**PCT/JP2011/068524**

(87) International publication number:
**WO 2012/023540 (23.02.2012 Gazette 2012/08)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **20.08.2010 JP 2010185370**

(71) Applicant: **Rakuten, Inc.**
**Tokyo 140-0002 (JP)**

(72) Inventor: **MATSUO Keisuke**
**Tokyo 140-0002 (JP)**

(74) Representative: **HOFFMANN EITLE**
**Patent- und Rechtsanwälte**
**Arabellastrasse 4**
**81925 München (DE)**

(54) **INFORMATION PROVISION DEVICE, INFORMATION PROVISION METHOD, PROGRAMME, AND INFORMATION RECORDING MEDIUM**

(57)     An information provision device (12) presents more appropriate search results to the user while using an existing search function. A query reception part (201) receives input of a query. An acquisition part (202) acquires search results consisting of matched information containing identification information and a snippet of a search target satisfying the query. A correction part (203) corrects the search results for each piece of matched information contained in the search results based on the character string obtained by removing the character string contained in the query from the character string of the snippet corresponding to the matched information. A presentation part (204) presents the matched information contained in the corrected search results.

FIG. 3

**Description**

Technical Field

The present invention relates to an information provision device, information provision method, program, and information recording medium for presenting more appropriate search results to the user while using an existing search function.

Background Art

Various information provision systems providing information for easier comparison of products or services the user is interested in have been proposed in the prior art.

The aforementioned information provision system generally consists of a terminal device and information provision device connected via a network. The network means various computers being connected to each other in a communicable manner and also called a computer communication network. The currently most extensively-used network is the Internet.

Here, the terminal device receives a keyword entered by the user in regard to a product or service the user is interested in.

On the other hand, the information provision device retains data such as descriptions and advertising statements explaining details of products and/or services in advance.

The keyword entered into the terminal device is transferred to the information provision device via the network. The information provision device searches the data prepared in advance with a query containing the transferred keyword.

Upon the search, it is determined whether the keyword regarding the query appears in the description or advertising statement of a product or service. Data fulfilling the search condition expressed by the query are acquired based on the determination results.

Then, the information provision device transfers to the terminal device the search results in which the acquired data are arranged in the order of degree of matching or in the order of score presenting the significance of the data.

The terminal device displays the search results on the screen to present the products and/or services that match with the desire of the user. The search results include snippets presenting descriptions and/or advertising statements or summaries or outlines thereof on the products and/or services.

With the search results being presented from the information provision system, the user is urged to take action such as viewing detailed information, purchasing, and making reservations for a found product or service.

As the information provision system presents to the user advertising statements or summaries thereof on the products and/or services, it can be said that the information provision system fulfills the advertising function.

Many information provision systems impose an upper limit on the number of data or snippets contained in the search results presented to the user at a time so as to reduce the workload of calculation and/or communication and compose an appropriate screen layout for easier composition by the user.

Currently, in most cases, the Internet is used as the network, portable terminals such as cell-phones and smart-phones having the web browser function and PDAs (personal data assistants), and personal computers are used as the terminal device, and server computers realizing the database function for data accumulation and search and the web server function for communication with the web browser are used as the information provision device.

By the way, Patent Literature 1 has proposed a technique allowing the user to view the data he/she searched for in the past on a preferential basis through simple operation among data fulfilling the search condition.

Patent Literature 2 discloses a search technique providing the user with advertisement fitting the attributes of the user. In this search technique, various attributes of products and/or services are given in advance and the user can select and search for a desired attribute as necessary.

Prior Art Literature

Patent Literature

Patent Literature 1: Unexamined Japanese Patent Application Kokai Publication No. 2008-250663; and Patent Literature 2: Unexamined Japanese Patent Application Kokai Publication No. 2007-026456.

Disclosure of Invention

Problems to be Solved by the Invention

Nowadays new products and/or services emerge every day and the trends change rapidly. Descriptions and advertising statements of products and/or services are often created by the product sellers and/or service providers themselves. Therefore, data presented to the users by the information provision system in regard to the products and/or services are created by a large number of product sellers and service providers.

Some product sellers and/or service providers may create descriptions and/or advertising statements containing inappropriate language in attempting to increase the chance of their own products or services being presented.

In such a case, inappropriate descriptions and/or advertising statements may appear at or near the top of the search results. Then, the credibility of the entire information provision system may be impaired because of inappropriate language contained in the data at or near the top of the displayed search results.

Therefore, there is a demand for a technique for controlling the display of data regarding a product or service in the search results if the description and/or advertising statement of the product or service contains inappropriate language.

The present invention is intended to solve the above problem and an exemplary object of the present invention is to provide an information provision device, information provision method, program, and information recording medium suitable for presenting more appropriate search results to the user while using an existing search function.

Means for Solving the Problems

The information provision device according to a first exemplary aspect of the present invention comprises:

a query reception part receiving input of a query;
an acquisition part acquiring search results consisting of matched information containing identification information and a snippet of a search target satisfying the query;
a correction part correcting the search results in regard to matched information contained in the search results based on the character string obtained by removing the character string contained in the query from the character string of the snippet contained in the matched information; and
a presentation part presenting the matched information contained in the corrected search results.

Furthermore, it is possible in the information provision device of the present invention that:

the acquisition part makes an external information search device search for a search target based on the query and acquires the search results.

Furthermore, it is possible that the information provision device of the present invention comprises:

a search part searching for a search target based on the query,
wherein the acquisition part acquires the search results found by the search part.

Furthermore, it is possible in the information provision device of the present invention that:

the matched information further contains the rank of the found search target; and
the correction part corrects the search results by changing the rank of matched information constituting the search results based on the obtained character string.

Furthermore, it is possible in the information provision device of the present invention that:

the presentation part presents the matched information contained in the corrected search results based on the corrected rank.

Furthermore, it is possible in the information provision device of the present invention that:

the correction part corrects the search results by narrowing down matched information contained in the search results based on the obtained character string.

Furthermore, it is possible in the information provision device of the present invention that:

the correction part corrects the search results based on the length of the obtained character string.

Furthermore, it is possible in the information provision device of the present invention that:

the correction part compresses the obtained character string using a given compression algorithm and corrects the search results based on the compressed data volume.

Furthermore, it is possible in the information provision device of the present invention that:

the correction part compresses the obtained character string using a given compression algorithm and corrects the search results based on the ratio between the compressed data volume and the data volume of the snippet.

Furthermore, it is possible in the information provision device of the present invention that:

the correction part further corrects the search results by processing the snippet so that the character string contained in the query does not appear in the snippet contained in the matched information more than a given number of times.

The information provision method according to a second exemplary aspect of the present invention is executed by an information provision device comprising a query reception part, an acquisition part, a correction part, and a presentation part, comprising:

a reception step in which the query reception part receives input of a query;

an acquisition step in which the acquisition part acquires search results consisting of matched information containing identification information and a snippet of a search target satisfying the query;

a correction step in which the correction part corrects the search results in regard to matched information contained in the search results based on the character string obtained by removing the character string contained in the query from the character string of the snippet contained in the matched information; and

a presentation step in which the presentation part presents the matched information contained in the corrected search results.

The program according to a third exemplary aspect of the present invention allows a computer to function as:

a query reception part receiving input of a query;

an acquisition part acquiring search results consisting of matched information containing identification information and a snippet of a search target satisfying the query;

a correction part correcting the search results in regard to matched information contained in the search results based on the character string obtained by removing the character string contained in the query from the character string of the snippet contained in the matched information; and

a presentation part presenting the matched information contained in the corrected search results.

The computer-readable, non-transitory information recording medium according to a fourth exemplary aspect of the present invention records a program allowing a computer to function as:

a query reception part receiving input of a query;

an acquisition part acquiring search results consisting of matched information containing identification information and a snippet of a search target satisfying the query;

a correction part correcting the search results in regard to matched information contained in the search results based on the character string obtained by removing the character string contained in the query from the character string of the snippet contained in the matched information; and

a presentation part presenting the matched information contained in the corrected search results.

Here, the program of the present invention can be recorded on a computer-readable, non-transitory information recording medium such as a compact disc, flexible disc, hard disc, magneto-optical disc, digital video disc, magnetic tape, and semiconductor memory.

The above program can be distributed/sold via a computer communication network independently from a computer on which the program runs. Furthermore, the above information recording medium can be distributed/sold independently from the computer.

Efficacy of the Invention

The present invention can provide an information provision device, information provision method, program, and information recording medium suitable for presenting more appropriate search results to the user while using an existing search function.

Brief Description of Drawings

FIG. 1 is an explanatory illustration showing the general configuration of the information provision system according to an embodiment of the present invention;

FIG. 2 is an explanatory illustration showing the general configuration of a computer running a given program so as to realize the information provision device according to the embodiment;

FIG. 3 is an explanatory illustration showing the general configuration of the information provision device according to the embodiment;

FIG. 4 is an explanatory illustration showing the general configuration of the information provision device according to the embodiment;

FIG. 5 is a flowchart showing the control flow in the information provision procedure executed in the information provision device according to the embodiment;

FIG. 6 is an explanatory illustration showing how the terminal device presents the search results to the user in the prior art;

FIG. 7 is an explanatory illustration showing how the terminal device presents the search results to the user in the embodiment; and

FIG. 8 is an explanatory illustration showing how the terminal device presents the content regarding link information contained in the search results to the user in the embodiment.

Mode for Carrying Out the Invention

An embodiments of the present invention will be described hereafter. This embodiment is given for the purpose of explanation and does not confine the scope of the invention of the present application. The person of ordinary skill in the field may embrace an embodiment in which some or all components are replaced with equivalent counterparts and such an embodiment falls under the scope of the present invention.

(1. Information Provision System)

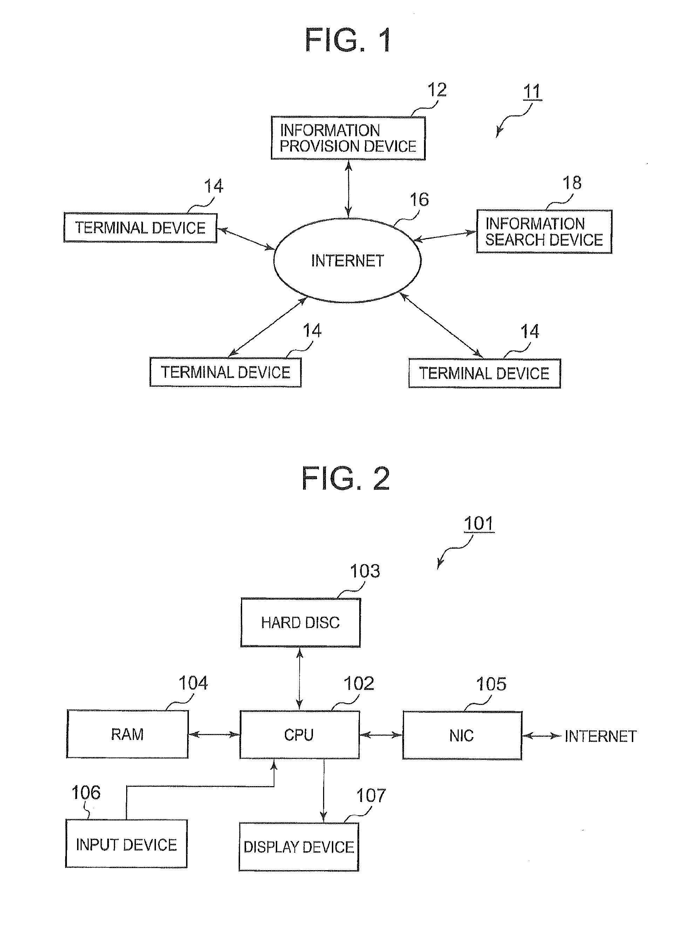

FIG. 1 is an explanatory illustration showing the general configuration of the information provision system according to this embodiment. The following explanation will be made with reference to this figure.

In an information provision system 11, an information provision device 12 and terminal devices 14 are communicably connected via the Internet 16. Furthermore, in this embodiment, an information search device 18 is communicably connected to the information provision device 12 via the Internet 16.

The information provision device 12, terminal devices 14, and information search device 18 are each realized by running a program fulfilling the function of a specific application on a computer suitable for the specific application.

Here, the information provision device 12 realizes the function of a database accumulating data regarding products and/or services and the function of a web server in charge of communication with the terminal devices 14. In this embodiment, the information provision device 12 further realizes the electronic business transaction function enabling online sales of products and/or reservations for services.

The users who wish to conduct some investigation on a product or service use their own terminal device 14 to receive information regarding the product or service from the information provision device 12.

Furthermore, the product sellers and/or service providers who wish to register information regarding their product or service at the information provision system 11 use their own terminal device 14. The product sellers and/or service providers register data including various kinds of descriptive information such as descriptions and advertising statements regarding their products or services in the information provision device 12 using their terminal device 14.

The information search device 18 retains the data registered in the information provision device 12 for search and conducts preprocessing such as indexing on the data so as to enable high-speed search based on queries.

A general search engine conducts search on electronic documents released on the Internet. The information search device 18 can be realized also by applying the above search engine function according to this embodiment to data registered in the information provision device 12. Alternatively, the information search device 18 can be realized by using a database specialized in the data registered in the information provision device 12.

In addition, the information provision device 12 and information search device 18 are realized by separate computers in this embodiment. However, the information provision device 12 and information search device 18 can be realized on a single computer.

The users, product sellers, and service providers use the browsers on the terminal devices 14 to communicate with the information provision device 12.

After a product seller or service provider registers data regarding his/her product or service in the information provision device 12, the information provision device 12 assigns identification information to the registered product or service. Then, the information provision device 12 associates the identification information with descriptive information and allows the information search device 18 to conduct preprocessing.

The information search device 18 conducts indexing for enabling high-speed search in the preprocessing. In addition, snippets presenting the summaries or outlines of the descriptive information of products and/or services can be created in advance in association with the identification information. The snippets can be created in accordance with a given query upon execution of search.

The user sends a query specifying a keyword regarding a desired product or service to the information provision device 12 via the terminal device 14.

Then, the information provision device 12 sends to the terminal device 14 the search results acquired by executing a procedure described later as appropriate.

The search results include matched information corresponding to each piece of information regarding the searched product or service. Each piece of matched information includes the following information:

(a) identification information of the product or service;
(b) a snippet for the product or service; and
(c) the rank or score of the product or service.

The search results include multiple pieces of matched information when there are multiple products or services matching the query. On the other hand, the search results include no matched information when there is no product or service matching the query.

The rank or score does not need to be explicit information; it can be expressed by the order of matched information arranged in the search results. For example, of the matched information arranged as the search results, the first matched information has the highest score and ranked first, and the second matched information has the second highest score and ranked second.

If the user selects any matched information in the search results displayed on the screen of the terminal device 14, the selected matched information is sent to the information provision device 12.

Here, the term "select" in this embodiment refers to viewing detailed information of the product or service, or purchasing the product or making reservations for the service.

The information provision device 12 manages history information such as search history and selection history on the products and/or services the user searched for or selected in the past. In other words, the information provision device 12 accumulates identification information of the products and/or services the user searched for and identification information of the products and/or services the user selected.

The information provision device 12 further manages various pieces of personal information the user entered in advance (for example, name, gender, age, telephone number, email address, residential area, number of family members. etc.), and user identification information given to the user in advance. This kind of information is called user information.

Product sellers and/or service providers can set up information as to whom their product or service will be suitable for (for example, age, gender, single person/couple/family-oriented, etc.). This kind of information is called attribute information.

The prior art information provision device 12 acquires the search results as a result of search by the external information search device 18 and sends the acquired search results as they are in the order of display to the terminal device 14 of the user.

This embodiment is characterized in that the information provision device 12 makes corrections on the search results from the information search device 18 so as to provide the user with further appropriate search results while using the existing information search device 18 as it is.

The information provision device 12 according to this embodiment will be described further in detail hereafter.

(2. Information Provision Device)

The information provision device 12 according to this embodiment is realized by running a given program on a server computer.

FIG. 2 is an explanatory illustration showing the general configuration of a computer running a given program so as to realize the information provision device 12 according to this embodiment. The following explanation will be made with reference to this figure.

A computer 101 according to this embodiment realizes the information provision device 12 as a CPU (central processing unit) 102 reads a program recorded on a hard disc 103 into a RAM (random access memory) 104 and runs the program, and controls a NIC (network interface card) 105.

In other words, the CPU 102 controls the operation of the entire computer 101, is connected to the components, and exchanges control signals and data signals.

The hard disc 103 is a large capacity external storage and non-temporarily records programs executed by the CPU 102 and data to be processed by the programs.

The RAM 104 stores data and programs to be processed by the CPU 102 during processing so as to enable the processing and execution.

The NIC 105 is used to connect the computer 101 to the Internet 16. It is possible to obtain data and/or programs to be processed by the CPU 102 from the Internet 16 via a signal medium temporarily transferring various kinds of information.

The computer 101 is additionally provided with an input device 106 for the administrator of the information provision device 12 to make various kinds of input, and a display device 107 for displaying information from the information provision device 12 to the administrator.

Although the capability of the parts of the computer 101 shown in the figure can be changed as appropriate, the principle of operation that the CPU 102 runs programs to control the parts and to realize various devices does not change. For example, the computer 101 runs a program for the terminal to realize the terminal device 14 and a program for information search to realize the information search device 18.

Furthermore, it is possible to run a program for the information provision device 12 and a program for the information search device 18 in parallel so that a single computer 101 realizes the information provision device 12 and information search device 18 concurrently.

Some portable terminals such as various types of cell-phones, smart-phones, and PDAs (persona data assistants) utilize a flash memory instead of the hard disc 103 and/or a communication interface to a cell-phone network instead of the NIC 105. However, such functional configurations are the same as the computer 101.

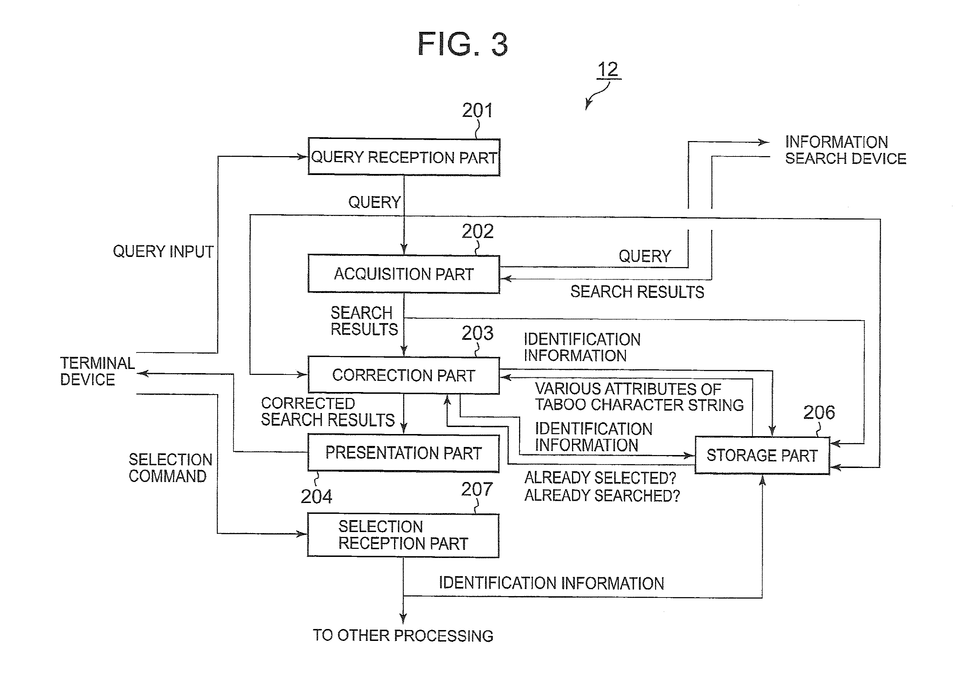

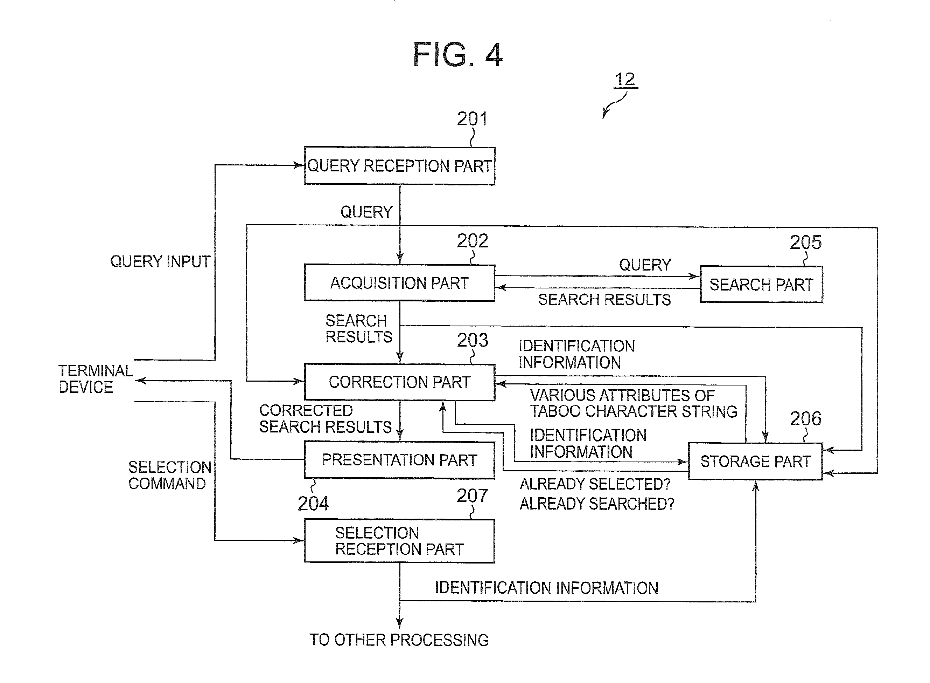

FIGS. 3 and 4 are explanatory illustrations showing the general configuration of the information provision device 12 according to this embodiment. The following explanation will be made with reference to these figures.

As shown in the figures, the information provision device 12 comprises a query reception part 201, an acquisition part 202, a correction part 203, and a presentation part 204.

Depending on the configuration, the information provision device 12 may comprise a storage 206 and a selection reception part 207. FIGS. 3 and 4 show a configuration including these components.

FIG. 3 shows a configuration excluding a search part 205 and FIG. 4 shows a configuration including the search part 205.

The query reception part 201 receives input of a query sent from the terminal device 14 used by the user. Then, in this embodiment, the NIC 105 or the like functions as the query reception part 201 under the control of the CPU 102 of the computer 101.

On the other hand, the acquisition part 202 acquires search results consisting of matched information including identification information and snippets of search targets fulfilling the query.

In this embodiment, the NIC 105 or the like of the computer 101 function as the acquisition part 202 under the control of the CPU 102.

In the embodiment shown in FIG. 3, the acquisition part 202 sends the received query to the external information search device 18 so that the external information search device 18 conducts search. Then, the acquisition part 202 acquires the search results from the external information search device 18.

In the embodiment shown in FIG. 4, the search part 205 of the information provision device 12 has the same function as the external information search device 18. Thus, the search part 205 conducts search based on the query within the information provision device 12.

In such a case, the search part 205 is realized on the computer 101 by the CPU 102 accessing the hard disc 103 storing databases and utilizing the RAM (random access memory) 104 and/or hard disc 103 as the area for managing temporary information during processing.

The search results acquired by the acquisition part 202 are temporarily retained in the RAM 104.

Then, the correction part 203 corrects the search results.

The method of correcting the search results can consist of removing matched information that is inappropriate and better not to be seen by the user if possible from the search results to narrow down, or lowering the rank of inappropriate matched information.

Thus, the correction part 203 is realized on the computer 101 by the CPU 102 cooperating with the RAM 104 and/or hard disc 103.

Then, the presentation part 204 presents the matched information contained in the corrected search results.

In this embodiment, the information provision device 12 sends the corrected search results to the terminal device 14. The terminal device 14 receives the search results and the matched information contained in the received search results is presented on the screen of the terminal device 14.

Thus, in this embodiment, the NIC 105 functions as the presentation part 204 by communicating with the terminal device 14 under the control of the CPU 102.

Furthermore, the selection reception part 207 receives a selection command on the presented matched information from the user.

In other words, the selection reception part 207 receives a request to view detailed information of the product or service or a request to purchase the product or to make reservations for the service from the user who was presented the search results. After receiving a selection command, an ordinary online sales procedure is activated.

Thus, in this embodiment, the NIC 105 functions as the selection reception part 207 by communicating with the terminal device 14 under the control of the CPU 102.

The storage 206 further stores the following information:

    (a) taboo character strings, or so-called NG (no good) words, for products and/or services associated with product and/or service identification information;

    (b) attribute information indicating the categories of products and/or services; and

    (c) user information indicating the categories of users.

The above information is information that is not frequently updated.

Of the information stored in the storage 206, the attribute information and user information can be set up by the product sellers and/or service providers and users themselves. On the other hand, taboo character strings are set up by the administrator of the information provision device 12.

A known evaluation system extensively used in the SNSs (social network systems) can be employed to set up the taboo character strings for products and/or services without the user being aware of it.

The storage 206 further stores the following information.

    (d) Identification information corresponding to the matched information contained in the search results (before corrected by the correction part 203) for the query from the user is stored as identification information already searched by the user. If there are a huge number of search results, it is not likely that all the matched information contained in the search results is presented to the user. Therefore, it is possible to store only the identification information corresponding to, for example, the top 100 matched information of the matched information contained in the search results as the identification information already searched by the user.

    (e) Identification information corresponding to the matched information selected with a selection command from the user is stored as identification information already selected by the user. After a request to view detailed information of the product or service or a request to purchase the product or make reservations for the service is made, the identification information of the product or service becomes one of those already selected.

The above information frequently changes according to the actions of the user.

In this embodiment, the storage 206 is realized on the computer 101 by the hard disc 103 or the like constituting a service information database and/or user information database under the control of the CPU 102.

Since the information of the above (a), (b), and (c) and the information of the above (d) and (e) are different in time to be stored and/or in subject to set up for, they can be managed in multiple separate databases. In such a case, the multiple databases together realize the storage 206.

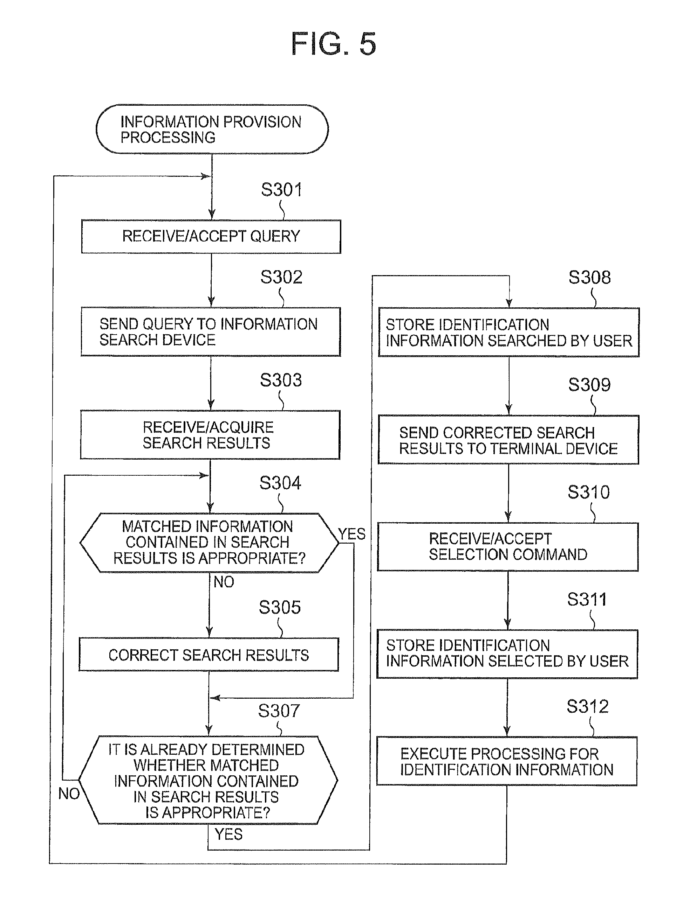

FIG. 5 is a flowchart showing the control flow in the information provision procedure executed by the information provision device 12 according to this embodiment. The following explanation will be made with reference to this figure.

As the information provision procedure starts, the information provision device 12 receives a query sent from the terminal device 14 (Step S301). This reception of a query means that the query reception part 201 executes reception of query input.

Receiving the query, the acquisition part 202 sends the query to the external information search device 18 (Step S302).

Then, the information provision device 12 receives the search results sent from the information search device 18 (Step S303). This reception of the search results means that the acquisition part 202 executes acquisition of search results.

Then, the correction part 203 determines whether the matched information contained in the search results is appropriate (Step S304). Various schemes of determining whether to be appropriate will be described later.

Then, if the matched information is appropriate (Step S304; Yes), simply proceeds to Step S307.

On the other hand, if the matched information is not appropriate (Step S304; No), the search results containing the matched information are corrected (Step S305), then proceeding to Step S307.

The search results can be corrected by:

(a) deleting the matched information from the search results;
(b) changing the rank of the matched information so that it is ranked lower in the search results; or
(c) lowering the score of the matched information so that it is ranked lower in the search results.

Here, it is determined whether to be appropriate as search results. However, it is possible to calculate "an appropriateness level" as described later and adjust the score or rank of the matched information according to the appropriateness level.

Furthermore, when the rank of matched information is indicated by the order of matched information within the search results, the correction to change the rank can be made by altering the order of matched information within the search results.

With the above configuration, the rank or score of matched information can be changed so that the matched information is ranked lower as it is of a lower level of appropriateness or of a higher level of inappropriateness.

It is determined whether the above-described determination as to whether matched information is appropriate is completed for all the matched information (Step S307). If it is completed (Step S307; Yes), proceeds to Step S307. If it is not completed (step S307; No), returns to Step S304. After all the matched information is determined to be appropriate or not as described above, the search results to be presented to the user in which matched information containing inappropriate language is corrected can be obtained.

In the above-described search results, product or service information that is better not to be seen by the user if possible is deleted or ranked lower. Therefore, the information provision system 11 will not lose the trust of the user.

In the Steps S304 to S307, the search results are corrected on the basis of each piece of matched information. The search results can be corrected at a time. For example, after the scores of all the matched information are changed, the matched information is deleted from the search results based on the score, or altered in rank within the search results.

Obtaining the search results, the storage 206 stores identification information corresponding to the matched information contained in the search results as those already searched by the user who sent the query (Step S308).

In other words, the storage 206 associates and stores the identification information corresponding to the products and/or services contained in the results of search by the user with user identification information of the user as search history.

Then, the presentation part 204 sends the corrected search results to the terminal device 14 (Step S309).

Receiving the corrected search results, the terminal device 14 displays the matched information contained in the search results in the corrected order on the display means such as a browser of the terminal device.

The matched information contained in the corrected search results contains link information (for example, a URL (universal resource locator)). A selection command of the user on the matched information is sent from the terminal device 14 to the information provision device 12 based on user operation (for example, clicking the mouse or tapping on the touch panel) on the link information.

On the other hand, the information provision device 12 receives the selection command by the user sent from the terminal device 14 (Step S310). This reception of a selection command means that the selection reception part 207 executes reception of a selection command.

As the selection command is received, the storage 206 stores the identification information corresponding to the selected matched information as one of those already selected by the user who sent the selection command (Step S311).

In other words, the storage 206 associates and stores the identification information corresponding to the product or service regarding a request to view detailed information or a request to purchase or make reservations from the user with the user identification information of the user as selection history.

Then, the information provision device 12 executes a response procedure corresponding to the request to view or request to purchase or make reservations specified by the selection command from the user in regard to the identification information using the web server function and/or electronic business transaction function (Step S312), then returning to Step S301.

In the response procedure activated in the Step S312, detailed information of the product or service is provided or application for purchasing the product or making reservations for the service is processed. Details of these processes are the same as those of existing online sales or online reservations of products or services.

As described above, in this embodiment, the storage 206 stores the history of actions of the user including search history and selection history. However, if the history of actions of the user is unnecessary in the determination described later, the storage 206 and procedures to store the history can be eliminated.

Furthermore, in this embodiment, the storage 206 stores attributes of the products, services, sellers, and providers, and attributes of the users. However, if attributes of the products, services, sellers, and providers and attributes of the users are unnecessary in the determination described later, the storage 206 and procedures to store the attributes can be eliminated.

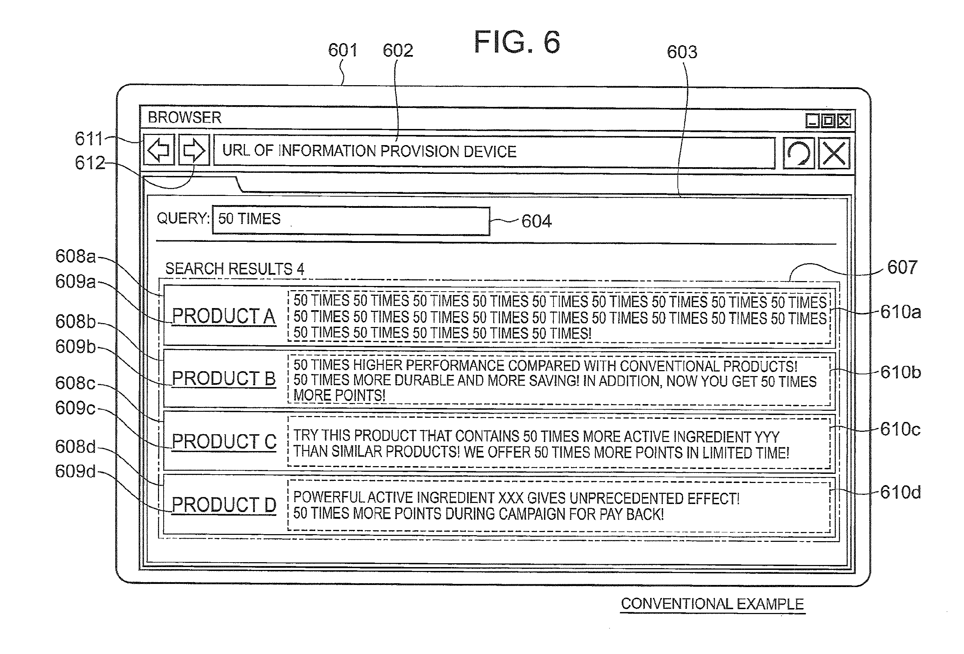

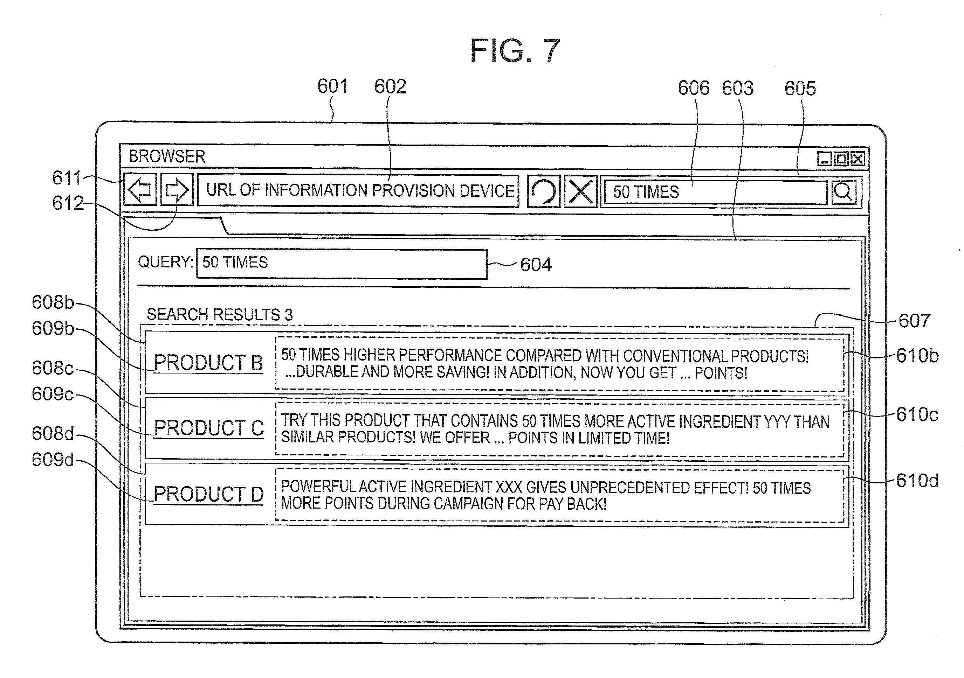

FIG. 6 is an explanatory illustration showing an exemplary display for the terminal device 14 to present search results to the user in the prior art. FIG. 7 is an explanatory illustration showing an exemplary display for the terminal device 14 to present search results to the user in this embodiment. The following explanation will be made with reference to these figures.

The exemplary display in these figures is obtained as follows. On the computer 101, the CPU 102 reads and runs a browser program recorded on the hard disc 103 onto the RAM 104, receives input from the user via the input device 106, requires the information provision device 12 for various kinds of information via the NIC 105, and displays the obtained information on the display device 107.

Operations on the browser displayed on the screen 601 of the display device 107 and how search results are displayed as shown in FIGS. 6 and 7 through the operation will be described hereafter.

First, as the user enters the URL of the information provision device 12 in a URL input field 602, an HTML (hyper text markup language) document is sent from the information provision device 12 to the terminal device 14.

The HTML document is formatted based on style sheet information and tag information specified in the HTML document and displayed in a content display area 603 of the browser screen 601.

The HTML document sent from the information provision device 12 contains tag information for forming a query input field 604. As the user enters a keyword regarding his/her desired product or service in the query input field 604, the query is sent from the terminal device 14 to the information provision device 12.

In addition, in the embodiment shown in FIG. 7, a search tool bar 605 prepared as an add-on or plug-in of the browser is provided. A query input field 606 is provided within the search tool bar 605. The user does not need to enter the URL of the information provision device 12 and wait for the query input field 604 being displayed in the content display area 603. Instead, the user can directly enter a keyword in the query input field 606 within the search tool bar 605, whereby the query is sent from the terminal device 14 to the information provision device 12.

Here, it is assumed that the user is interested in a product or service that is a campaign target for which 50 times more points are given and a keyword "50 times" is entered in the query input field 606 in these figures.

Then, the information provision device 12 executes the information provision procedure shown in FIG. 5. The information provision device 12 according to this embodiment sends an HTML document created based on the corrected search results to the terminal device 14 while the information provision device according to the prior art creates and sends an HTML document to the terminal device 14 without correcting the search results acquired from the information search device 18 or internal search part 205.

The HTML document created based on the search results contains metatag information for forming a search results display field 607. In both of FIGS. 6 and 7, multiple pieces of matched information 608 are displayed in the search results display field 607. As mentioned above, since the user has entered the keyword "50 times," the matched information 608 contains identification information 609 and snippets 610 of products and/or services containing the keyword "50 times" in descriptive information such as descriptions and advertising statements.

Here, in the figures, in order to distinguish individual pieces of matched information 608, and identification information 609 and snippets 610 contained in the matched information from each other, their reference numbers have suffixes consisting of lower-case English letters.

In FIGS. 6 and 7, the identification information 609 is presented by a link for viewing detailed information of the product or service, and underlined to indicate that the link is selectable. As the user selects the link with a mouse or keyboard, a selection command is sent from the terminal device 14 to the information provision device 12.

The snippets 610 contain the keyword "50 times" entered by the user.

Here, comparison of the search results display field 607 between FIGS. 6 and 7 reveals that there is a little difference in the displayed matched information 608.

As shown in FIG. 6, the matched information 608a, matched information 608b, matched information 608c, and matched information 608d are matched information regarding a product A, product B, product C, and product D, respectively.

In the matched information 608a, the phrase "50 times" is repeatedly used to fill most of the entire snippet 610a while the phrase "50 times" is used one to three times in the snippet 610b of the matched information 608b, the snippet 610c of the matched information 608c, and the snippet 610d of the matched information 608d. In this exemplary display, the search results in which a higher rank is given as the keyword appears more frequently in the snippet are displayed.

On the other hand, in FIG. 7, the matched information 608b, matched information 608c, and matched information 608d are displayed, but the matched information 608a is not displayed. This is as a result of a determination scheme 1 described later. Since the snippet 610a contains almost no information unknown to the user, the matched information 608a is determined to be inappropriate and deleted from the search results.

Furthermore, unlike FIG. 6, the phrase "50 times" appears once in the first use and is replaced with an omit symbol in the subsequent uses in the snippets 610b, 610c, and 610d of the matched information 608b, 608c, and 608d.

As described above, in this embodiment, matched information appropriate and useful for the user who has entered the query is given priority in presentation.

Various schemes to determine whether the matched information is appropriate will be described hereafter.

(3. Determination Scheme 1)

The first determination scheme utilizes the character string of the query entered by the user.

As the user specifies a desired keyword to use a conventional search engine, the URLs of documents in which the keyword appears and snippets presenting the summaries or outlines of the documents are presented to the user as the search results.

In this embodiment, with the configuration in which the information search device 18 creates snippets presenting the outlines of descriptions or advertising statements of products and/or services, the snippets are associated on the basis of matched information and sent to the information provision device 12.

On the other hand, with the configuration in which the information provision device 12 manages the snippets, the information search device 18 sends identification information of products and/or services to the information provision device 12 and the information provision device 12 associates the identification information with the snippets to constitute matched information.

The snippets are important information for the user to compare and examine matched information. The character string of the keyword specified by the user and contained in the query almost always appears in the snippets. The character string of the keyword is known to the user since it was specified by the user.

Therefore, the character string contained in a processed snippet from which the character string of the keyword has been removed can be considered to be unknown and useful information for the user.

As described above, in this determination scheme, the character string contained in a processed snippet from which the character string of the keyword has been removed, namely the character string obtained by removing the character string contained in the query from the snippet is used to determine whether the matched information is appropriate.

Generally, the matched information of which the processed snippet contains a more informative character string is considered to be more useful and appropriate for the user than the matched information of which the processed snippet contains a less informative character string. The matched information is considered to be useless and inappropriate for the user if the processed snippet thereof contains a character string that is extremely poor in information.

For example, it is assumed that this embodiment is applied to an electronic business transaction system with which points are accumulated upon each purchase of a product or service, and the user specifies a keyword "50 times" to search for a campaign target product or service for which 50 times more points are given. On the other hand, it is assumed that the product seller or service provider created an advertising statement in which the phrase "50 times" is repeatedly used such as "50 times 50 times 50 times 50 times 50 times 50 times 50 times!" as an advertising statement for the campaign target product or service.

Then, the phrase "50 times" is repeatedly used such as "50 times 50 times 50 times 50 times 50 times 50 times 50 times!" also in the snippet created from the above advertising statement.

Since the advertising statement contains many of the keyword "50 times," the information search device 18 ranks the product or service higher in the search results. However, the snippet to be presented consists of only a string of the specific keyword and contains very little useful information for the user.

In this example, the keyword "50 times" is removed from the snippet "50 times 50 times 50 times 50 times 50 times 50 times 50 times!" Then, the processed snippet consists of a character "!"

In this example, the quantity of useful information regarding the product or service is estimated based on the processed snippet "!"

The quantity of information can be estimated most simply by assuming that "the inappropriateness level" is higher as the character string contained in the processed snippet is shorter.

As in the above example, if the product seller or service provider creates description or an advertising statement in which only the keyword the user is likely to use for search is repeatedly used, only the keyword repeatedly appears also in the snippet. When the keyword is specified in the query, the processed snippet contains a very short character string as a result of the above processing if the keyword is contained in the query specified by the user.

Then, the matched information corresponding to data regarding a product or service in the description or advertising statement of which the keyword is repeatedly used is determined to be inappropriate. The matched information is changed in rank for presentation and less likely to be seen by the user.

Another method of estimating the quantity of information of the character string contained in the processed snippet with accuracy to determine whether the matched information is appropriate consists of compressing the character string contained in the processed snippet by an appropriate compression algorithm such as the sliding dictionary method or the arithmetic code compression method.

In this determination scheme, the determination can be as follows. The matched information corresponding to a snippet is of a higher appropriateness level as the compression outcome of the character string contained in the processed snippet consists of a greater number of bits, and the matched information is of a lower appropriateness level as the compression outcome consists of a fewer number of bits.

In this determination scheme, the appropriateness level is obtained in numeric values. When a score is assigned to each piece of matched information, the score can be corrected using such numeric values. The correction part 203 corrects the ranks of matched information using the corrected scores to create the corrected search results.

On the other hand, it is possible to compare the obtained appropriateness level with a predetermined threshold to determine whether the matched information corresponding to the appropriateness level is appropriate.

The character string entered by the user as a query is not always one of those anticipated by the administrator of the information provision device 12. One of the characteristics of this determination scheme is that inappropriate matched information can be deleted or ranked differently even though the information provision device 12 does not manage so-called NG words at all.

Here, the unprocessed snippet or processed snippet can be presented in presenting the matched information to the user. In addition, apart from processing for determining the appropriateness level, it is possible to make changes in the unprocessed snippet by not deleting the part of the first appearance of the keyword specified by the user and deleting or replacing with an omit symbol the parts of the second and subsequent appearance of the keyword, and then present the changed snippet to the user.

(4. Determination Scheme 2)

This determination scheme utilizes the history of action of the user and taboo character strings imposed on the products and/or services and product sellers and/or service providers to determine whether to be appropriate.

Some product sellers and/or service providers may set a substantially unsuitable character string in description or an advertising statement of a product or service in attempting to increase the users in number.

For example, the character string "quiet" is inappropriate as description for the accommodation service of a hotel situated in downtown. On the other hand, the character string "quiet" is appropriate as description for the accommodation service of an inn in a remote area.

Then, such inappropriate character strings are set in the storage 206 for each product or service or for each product seller or service provider based on feedback from the users and/or checkup by the administrator of the information provision device 12. Such character strings are called taboo character strings.

Obscene or immoral words and words against public order and morality are often selected as NG words in search engines.

However, this determination scheme is characterized in that an ambiguous word that is not obscene or immoral or against public order and morality by itself, and appropriate for some products and/or services, but is inappropriate for a specific product or service is selected as a taboo character string.

In the simplest embodiment of this determination scheme, it is determined to be inappropriate if the following condition (a) is satisfied:

Condition (a) "the query contains a taboo character string stored in the storage 206 in association with the identification information specified by the matched information."

This scheme is considered to be application of a NG words technique to finely itemized products and/or services.

In an embodiment including additional conditions, the following conditions (b) and (c) are added to the above condition (a) and it is determined to be inappropriate when the three conditions (a), (b), and (c) are all satisfied:

Condition (b): "the identification information specified in the matched information is stored in the storage 206 as one of those already searched by the user"; and

Condition (c): "the identification information specified in the matched information is not stored in the storage 206 as one of those already selected by the user."

The conditions (b) and (c) will be satisfied for matched information that was presented to the user in the past but in which the user had no interest.

It is supposedly beneficial for the user to control the rank in display or display itself of the product or service of which the matched information is as described above and of which the description contains an inappropriate keyword.

Here, this determination scheme is intended to exclude the product or service from the search results even if an inappropriate word is used for search. Therefore, the administrator of the information provision device 12 does not need to do any specific task even if some product seller or service provider deletes a taboo character string from the description or advertising statement. This is because it is a natural consequence that the product or service is excluded from the search results for any query containing the taboo character string since the taboo character string is deleted.

Here, it is possible to accumulate statistic information as to whether matched information satisfies the conditions (b) and/or (c) for each keyword contained in queries in the past search by all users. In other words, the number of users with whom the condition (b) is satisfied, B, and the number of users with whom the condition (c) is satisfied, C, are tracked for specific matched information searched with a specific keyword.

If the ratio of C to B is equal to or lower than a given significantly low threshold in spite of the fact that a large number of users have conducted search and the number B is equal to or greater than a given number of samples and sufficiently high, the keyword is presumably inappropriate for the matched information. The given number of samples and given significantly low threshold can be set as appropriate according to the target to apply.

The given number of samples can be a constant that is a statistically significant number of times of search (for example, 100, 500, 1000, etc.). Furthermore, for setting a taboo character string periodically, for example every other month, by estimating whether the keyword is appropriate, it is possible to count the number of users satisfying the condition (b) in each period in regard to the identification information stored in the storage 206, calculating the average number of users per period satisfying the condition (b), multiplying the average by a positive constant less than 1 (for example, 0.1, 0.3, 0.5, etc.) to obtain a value used as the number B in the next period. Alternatively, it is possible to employ the average of these or a smaller value among these as the number B in the next period.

The significantly low threshold can be a positive constant less than 1 (for example, 0.001, 0.0001, 0.00001, or 0, etc.). For setting a taboo character string by estimating whether the keyword is appropriate periodically as described above, the following scheme can be employed. In other words, the number of users satisfying the condition (c) in each period is counted with regards to the identification information stored in the storage 206. The average number per period is calculated. The average is multiplied by a positive constant less than 1 (for example, 0.1, 0.01, 0.001, or 0, etc.) to obtain a value used as the number C in the next period. Alternatively, it is possible to employ the average in the above scheme or a smaller value among them as the number C in the next period.

Using the above estimation result, information on taboo character strings stored in the storage 206 can be updated appropriately based on the history of action of users.

(5. Determination Scheme 3)

Some product sellers and/or service providers may set substantially unsuitable attribute information for a product or service in attempting to increase the users in number.

For example, an attribute "family-oriented" is inappropriate for the accommodation service of a hotel having only single-bed rooms.

Then, the Determination Scheme 3 utilizes the following condition (d) instead of the above conditions (b) and (c) in the Determination Scheme 2:

Condition (d): "the attribute information of data stored in the storage 206 in association with the identification information specified in matched information does not match the attribute information of the user stored in the storage 206 in association with the user."

Use of the condition (d) can prevent, for example, a family-oriented hotel from being recommended to a single person.

Here, it is possible to use, for example, the technique disclosed in Patent Literature 2 for determining whether the user attribute information regarding a user and the data attribute information regarding a product or service match.

(6. Determination Scheme 4)

The above Determination Schemes 1 to 3 can be used in combination as appropriate. For example, using all of the Determination Schemes 1 to 3, the matched information can be ranked lower or excluded from presentation when any of the conditions is satisfied.

Furthermore, the condition (a) is common to the Determination Schemes 2 and 3. Reuse of the determination result of the condition (a) leads to high speed calculation processing.

(7. Other Configuration)

In the above configuration, upon search of a search target such as a product or service in an electronic products or services transaction system, the product or service's display rank or whether or not to display at all is controlled if descriptive information describing details of the product or service contains inappropriate language.

In this embodiment, particularly the above-described Determination Scheme 1 is applied to a broader range of search systems and the terminal device 14 functions as an information provision device.

The search target in this embodiment is not data regarding products and/or services, but electronic documents released on the Internet 16.

The information search device 18 functions as a so-called search engine. In other words, the information search device 18 periodically crawls through the documents released on the Internet 16, and retains various kinds of document data such as keywords contained in the documents, URLs of the documents, and caches of the documents.

As the user enters a desired keyword in the query input field 604 or query input field 606 for the information search device 18 using the terminal device 14, the keyword is transferred to the information search device 18 via the Internet 16.

The information search device 18 searches its own document data for documents containing the keyword transferred from the terminal device 14, and creates snippets by extracting the part where the keyword appears and the text before and after the part from the cache of the documents obtained as a result of the search. Upon the search, the documents are ranked.

Then, the information search device 18 makes pairs of the URLs of the documents and the snippets of the documents to create an HTML document in which the pairs are arranged according to the ranks of the documents. An HTML document is a so-called structured document in which the character strings are structured using various tags.

Within an HTML document, the URL and snippet of a document are enclosed by given tags to clearly indicate that they are information regarding a single document. The information enclosed by the tags is arranged in sequence to indicate the ranks of the documents.

The HTML document created in the above process corresponds to the search results. Furthermore, the information of the URL and snippet of a document enclosed by the tags in the HTML document corresponds to the matched information.

Then, the information search device 18 sends the created HTML document to the terminal device 14.

Receiving the HTML document, the terminal device 14 formats and displays the HTML document on the display screen of the browser.

In the prior art, the browser of the terminal device 14 formats and displays the HTML document sent from the information search device 18 on the display screen of the browser as it is.

In this embodiment, the browser of the terminal device 14 further processes the HTML document obtained from the information search device 18.

In order words, obtaining the HTML document of the search results, the browser of the terminal device 14 analyzes its structure and acquires the matched information consisting of the URL and snippet of a document enclosed by given tags in sequence.

Then, for each piece of matched information acquired, the browser of the terminal device 14 obtains a character string by removing the keyword used in the search from the snippet, and determines whether the matched information is appropriate from the length of the obtained character string or the compression rate of the obtained character string compressed with a given compression algorithm.

Then, if the matched information is not appropriate, the browser of the terminal device 14 deletes the part regarding the inappropriate matched information from the HTML document or moves the part regarding the inappropriate matched information down in the HTML document. In other words, the browser of the terminal device 14 corrects the HTML document dynamically.

After the HTML document is corrected in the above process, the corrected HTML document is displayed on the display screen of the browser of the terminal device 14.

The HTML document can be corrected in parallel while it is displayed on the display screen of the browser of the terminal device 14. Alternatively, the HTML document can be displayed after it is completely corrected.

As described above, in this embodiment, the search results obtained from an existing search engine realized by the external information search device 18 are corrected by the browser of the terminal device 14 dynamically.

The above dynamic correction function can be added to an existing browser as a plug-in or add-on. The program of the plug-in or add-on is written in a script language working with the browser and realizes the above process using the function of dynamically correcting an HTML document based on the DOM (document object model).

This embodiment can control whether to display or the rank in display of a document that is considered to be of a low value for the user in the search results, such as the one in which a specific keyword is repeatedly used, in using an existing search engine through the browser of the terminal device 14.

(8. Automatic Setting of Taboo Character Strings)

In the above embodiment, the administrator of the information provision device 12 sets taboo character strings. Taboo character strings can be set automatically by analyzing the action the user took after he/she obtained the search results via the browser.

As shown in FIG. 7, the search results contain link information such as the URLs of documents in which the keyword appears.

If the user selects link information through user operation on the link information such as clicking the mouse and tapping the touch panel, the selection command is sent from the terminal device 14 to the information provision device 12 and, as a result, the content associated with the link information is displayed in the content display area 603.

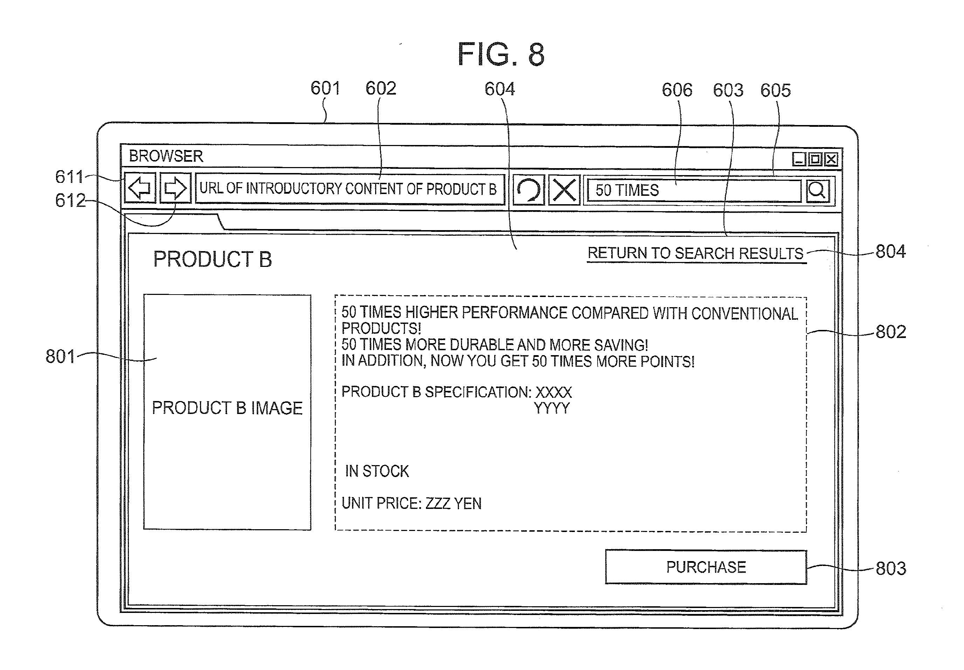

FIG. 8 is an explanatory illustration showing an exemplary display for the terminal device 14 to present the content regarding link information to the user after the user selects one of the link information contained in the search results shown in FIG. 7.

As shown in FIG. 8, the URL regarding the link information selected by the user is displayed in the URL input field 602 of the screen 601. Furthermore, the content specified by the URL of the link information is displayed in the content display area 603.

In this exemplary display, the content for introducing the product is displayed on the screen. Within the content, a product image 801 presenting the appearance of the product, an introductory statement 802 for introducing the product, a purchase button 803 for placing the product in an electronic cart for purchase, and a link "return" 804 for returning to the screen displaying the search results are provided.

The snippet 610 shown in FIG. 7 is created by partially eliminating the introductory statement 802.

In addition, it is possible to operate a button "return" 611 or a button "proceed" 612 of the browser so as to return or proceed through the browsing history.

Here, if the combination of the keyword and link information is useful for the user, the user may browse the content displayed in the content display area 603. If it is useless for the user, the user may stop browsing the content soon and operate the browser button "return" 611 or the link "return" 804 to display the search results as shown in FIG. 7 in the content display area 603 again.

In addition, discussion is made on the case in which the link information refers to the product introductory content introducing a product and the product introductory content associated with the link information is displayed in the content display area 603 as shown in FG. 7. The combination of the keyword and link information is presumably useful if the user selects the link information for purchasing the product. The combination of the keyword and link information is presumably useless if the user selects the link information for returning to the display of search results.

Then, a configuration to identify the action of the user after the terminal device 14 executes the add-on or plug-in of the browser, the user selects link information contained in the search results, and the content associated with the link information is displayed is installed.

Among the actions of the user, the first kind of action is an action that implies that the combination of the keyword and link information is inappropriate such as the following:

(a) the browser button "return" 611 is operated within a given time period, for example within several seconds, after the content is displayed;
(b) the browser button "return" 611 is operated with no selection being made on the link information in the content after the content is displayed; and
(c) of the link information provided in the content, the user selects the link

"return" 804 for returning to the search results after the content is displayed.

Among the actions of the user, the second kind of action is an action that implies that the combination of the keyword and link information is appropriate such as the following:

(p) the content is browsed for a given or more time period since it is displayed. The user has presumably read the content well; and
(q) of the link information provided in the content, the user selects link information from which it is anticipated that the user has interest in the content, such as the purchase button 803 for a product regarding the content, after the content is displayed.

The first kind of action is called "negative action" and the second kind of action is called "positive action" hereafter for easier understanding.

On the basis of the above, the terminal device 14 notifies the information provision device 12 of the identified action.

In addition, if the information provision device 12 also functions as a web server providing the product introductory contents, the above actions (c) and (q) can be identified by analyzing the type of content request from the terminal device 14.

Here, as the negative action and positive action, any of the above actions (a) to (c) and actions (p) and (q) can be selected as appropriate or any other actions can be added as appropriate.

Then, it is determined whether the keyword should be a taboo character string for the link information with reference to the numbers of times of negative actions or numbers of times of positive actions.

Then, if the keyword should be a taboo character string, the keyword is designated as a taboo character string for the link information; otherwise, the keyword is not designated as a taboo character string for the link information.

A keyword is designated as a taboo character string for link information in the following cases:

(a) the ratio of negative actions to a given number of times of most recent browsing of the content regarding the link information is equal to or higher than a threshold;
(b) the value resulting from subtracting the number of times of positive actions from the number of times of negative actions among a given number of times of most recent browsing of the content regarding the link information is equal to or higher than a threshold; (c) the ratio of the number of times of negative actions to the number of times of positive actions among a given number of times of most recent browsing of the content regarding the link information is equal to or higher than a threshold; and

(d) in the above (a), (b), and (c), the expression "a given number of times of most recent browsing of the content" is replaced with the expression "a given number of times of browsing after the content is released or updated." In other words, immediately after the content is released or updated, all taboo character strings for the link information are cancelled and taboo character strings for the link information are set based on how the user acts after the release or update.

One of the above cases can be used or the above cases can be used in combination.

Another scheme of determining whether the keyword is a taboo character string consists of successively detecting the action of the user, setting a taboo parameter for a combination of each keyword and link information dynamically, and determining whether the taboo parameter satisfies a given condition.

In the above scheme, first, a taboo parameter p is given an appropriate positive constant as an initial value Q. The taboo parameter is updated using constants A, B, and K satisfying $0 < A < 1 < B$ and $0 < K < 1$. The update is conducted as follows.

First, each time the keyword of interest is searched for, the weighted average of the initial value Q and taboo parameter p is obtained and the result is used to update the taboo parameter.

$$p \leftarrow K \times p + (1 - K) \times Q$$

In the above, the symbol "←" means substitution. With this process, the negative parameter p approaches the initial value Q.

Furthermore, if a negative action is detected after the search, the taboo parameter is multiplied by B.

$$p \leftarrow B \times p$$

With the above process, the negative parameter p is increased.

On the other hand, if a positive action is detected after the search, the taboo parameter is multiplied by A.

$$p \leftarrow A \times p$$

With the above process, the negative parameter p is decreased.

Then, while the taboo parameter exceeds a constant R greater than a given initial value Q, the keyword is designated as a taboo character string for the link information; otherwise, the keyword is undesignated as a taboo character string for the link information.

For easier understanding, explanation will be made using numeric values: A = 0.5, B = 1.2, K = 0.7, Q = 1.0, and R = 1.1. First, the initial value of the negative parameter p is:

$$p \leftarrow 1.0$$

Then, it is assumed that the user took a negative action after the search with the keyword of interest.

Then, the weighted average of the current value, 1.0, and initial value Q = 1.0 of the negative parameter p is calculated.

$$p \leftarrow 0.7 \times 1.0 + 0.3 \times 1.0 = 1.0$$

Furthermore, the negative parameter p is multiplied by B = 1.2.

$$p \leftarrow 1.2 \times 1.0 = 1.2$$

Then, the negative parameter p is greater than a constant R = 1.1. Therefore, the keyword is designated as a taboo character string for the link information. From then on, the link information is removed from the search results of search with the keyword, or ranked lower. Then, it is less likely that the user will take a negative action or positive action on the content of the link information.

However, as the search for the keyword is simply repeated, the negative parameter p changes as follows.

$$p \leftarrow 0.7 \times 1.2 + 0.3 \times 1.0 = 1.14;$$

$$p \leftarrow 0.7 \times 1.14 + 0.3 \times 1.0 = 1.098$$

As seen from the above, even after the keyword is designated as a taboo character string, the negative parameter p gradually approaches 1 each time the keyword is searched for. Then, the negative parameter p eventually becomes equal to or lower than a constant R even if the user takes no action on the content regarding the link information.

Then, the keyword is undesignated as a taboo character string for the link information. From then on, the link information is contained in the search results of search with the keyword.

If the user takes a positive action after the above search, the negative parameter p is multiplied by A = 0.5.

$$p \leftarrow 0.5 \times 1.098 = 0.549$$

This is lower than a constant R; the keyword is not designated as a taboo character string for the link information.

If the user takes a positive action upon further search, the negative parameter is calculated as follows, and becomes lower than a constant R and initial value Q:

$$p \leftarrow 0.7 \times 0.549 + 0.3 \times 1.0 = 0.6843;$$

$$p \leftarrow 0.5 \times 0.6843 = 0.34215$$

Subsequently, if the user takes a negative action upon further search, the negative parameter p is calculated as follows, and is increased:

$$p \leftarrow 0.7 \times 0.34215 + 0.3 \times 1.0 = 0.539505;$$

$$p \leftarrow 1.2 \times 0.539505 = 0.647406$$

If search and a negative action are further repeated subsequently, as in the above, the negative parameter p will gradually be increased and exceed a constant R at some point and the keyword is designated as a taboo string for the content.

After several times of subsequent search, the negative parameter p gradually approaches an initial value Q and becomes lower than a constant R, whereby the taboo character string is cancelled.

On the other hand, if search and a positive action are repeated, the negative parameter p continues to go down. Even if the user conducts a wrong operation that leads to search and a negative action, the negative parameter p does not immediately exceed a constant R.

As described above, a keyword can be designated and undesignated as a taboo character string dynamically by changing the negative parameter p based on the action of the user.

Alternatively, the taboo character string can be set based on the details of the content regardless of the action of the user.

A first scheme consists of extracting words antonymous to each other from the words contained in the content, comparing them in the number of times of appearance, and designating the one that appears less often as a taboo character string.

For example, if a word "simple" appears one time and a word "luxurious" appears ten times in a product introductory content, the word "simple" is designated as a taboo character string.

Making reference to a thesaurus of language describing the content, the information provision device 12 can automatically extract words antonymous to each other and compare them in the number of times of appearance.

A second scheme designates as a taboo character string a word situated next to a forbidden character string already designated by the administrator or by the above scheme with a given delimiter (for example, a comma, pause mark, parenthesis, etc.) in-between within the content regarding link information.

For example, if words "simple, plain" and words "luxurious, flamboyant" appear in a content and the word "simple" is already designated as a taboo character string, the word "plain" is also designated as a taboo character string.

In the above schemes, automatic designation of taboo character strings results in significantly reducing the administration workload of the administrator of the information provision device 12 and enabling appropriate management of taboo character strings.

This application claims the priority over Japanese Patent Application No. 2010-185370, filed on August 20, 2010, the entire disclosure of which is incorporated by reference herein to the extent that the national law of the designated nation allows.

Industrial Applicability

The present invention can provide an information provision device, information provision method, program, and information recording medium suitable for presenting more appropriate search results to the user while using an existing search function.

<div style="text-align:center">Description of Reference Numerals</div>

| | |
|---|---|
| 11 | Information provision system |
| 12 | Information provision device |
| 14 | Terminal device |
| 16 | Internet |
| 18 | Information search device |
| 101 | Computer |
| 102 | CPU |
| 103 | Hard disc |
| 104 | RAM |
| 105 | NIC |
| 106 | Input device |
| 107 | Display device |
| 201 | Query reception part |
| 202 | Acquisition part |
| 203 | Correction part |

(continued)

| | |
|---|---|
| 204 | Presentation part |
| 205 | Search part |
| 206 | Storage |
| 207 | Selection reception part |
| 601 | Screen |
| 602 | URL input field |
| 603 | Content display area |
| 604 | Query input field |
| 605 | Search tool bar |
| 606 | Query input field |
| 607 | Search results display field |
| 608 | Matched information |
| 609 | Identification information |
| 610 | Snippet |
| 801 | Product image |
| 802 | Introductory statement |
| 803 | Purchase button |

**Claims**

1. An information provision device, comprising:

a query reception part receiving input of a query;
an acquisition part acquiring search results consisting of matched information containing identification information and a snippet of a search target satisfying said query;
a correction part correcting said search results in regard to matched information contained in said search results based on the character string obtained by removing the character string contained in said query from the character string of the snippet contained in the matched information; and
a presentation part presenting the matched information contained in said corrected search results.

2. The information provision device according to Claim 1, wherein:

said acquisition part makes an external information search device search for a search target based on said query and acquires said search results.

3. The information provision device according to Claim 1, comprising:

a search part searching for a search target based on said query,
wherein said acquisition part acquires the search results found by said search part.

4. The information provision device according to Claim 1, wherein:

said matched information further contains the rank of the found search target; and
said correction part corrects said search results by changing the rank of matched information constituting said search results based on said obtained character string.

5. The information provision device according to Claim 4, wherein:

said correction part corrects said search results based on the length of said obtained character string.

6. The information provision device according to Claim 4, wherein:

said correction part compresses said obtained character string using a given compression algorithm and corrects said search results based on the compressed data volume.

7. The information provision device according to Claim 4, wherein:

said correction part compresses said obtained character string using a given compression algorithm and corrects said search results based on the ratio between the compressed data volume and the data volume of said snippet.

8. The information provision device according to Claim 1, wherein:

said correction part corrects said search results by narrowing down matched information contained in the search results based on said obtained character string.

9. The information provision device according to Claim 8, wherein:

said correction part corrects said search results based on the length of said obtained character string.

10. The information provision device according to Claim 8, wherein:

said correction part compresses said obtained character string using a given compression algorithm and corrects said search results based on the compressed data volume.

11. The information provision device according to Claim 8, wherein:

said correction part compresses said obtained character string using a given compression algorithm and corrects said search results based on the ratio between the compressed data volume and the data volume of said snippet.

12. The information provision device according to Claim 1, wherein:

said correction part further corrects said search results by processing said snippet so that the character string contained in said query does not appear in the snippet contained in said matched information more than a given number of times.

13. An information provision method executed by an information provision device comprising a query reception part, an acquisition part, a correction part, and a presentation part, comprising:

a reception step in which said query reception part receives input of a query;
an acquisition step in which said acquisition part acquires search results consisting of matched information containing identification information and a snippet of a search target satisfying said query;
a correction step in which said correction part corrects said search results in regard to matched information contained in said search results based on the character string obtained by removing the character string contained in said query from the character string of the snippet contained in the matched information; and
a presentation step in which said presentation part presents the matched information contained in said corrected search results.

14. A program, allowing a computer to function as:

a query reception part receiving input of a query;
an acquisition part acquiring search results consisting of matched information containing identification information and a snippet of a search target satisfying said query;
a correction part correcting said search results in regard to matched information contained in said search results based on the character string obtained by removing the character string contained in said query from the character string of the snippet contained in the matched information; and
a presentation part presenting the matched information contained in said corrected search results.

15. A computer-readable, non-transitory information recording medium on which a program is recorded, the program allowing a computer to function as:

a query reception part receiving input of a query;
an acquisition part acquiring search results consisting of matched information containing identification information and a snippet of a search target satisfying said query;
a correction part correcting said search results in regard to matched information contained in said search results based on the character string obtained by removing the character string contained in said query from the character string of the snippet contained in the matched information; and
a presentation part presenting the matched information contained in said corrected search results.

# FIG. 1

# FIG. 2

# FIG. 3

EP 2 608 064 A1

# FIG. 4

# FIG. 5

```
        ┌────────────────────────┐
        │ INFORMATION PROVISION  │
        │ PROCESSING             │
        └────────────────────────┘
                    │
                    ▼                      S301
        ┌────────────────────────┐
        │   RECEIVE/ACCEPT QUERY │
        └────────────────────────┘
                    │
                    ▼                      S302
        ┌────────────────────────┐
        │ SEND QUERY TO INFORMATION │
        │ SEARCH DEVICE          │
        └────────────────────────┘
                    │
                    ▼                      S303
        ┌────────────────────────┐
        │   RECEIVE/ACQUIRE      │
        │   SEARCH RESULTS       │
        └────────────────────────┘
                    │
                    ▼                      S304
```

S301 RECEIVE/ACCEPT QUERY

S302 SEND QUERY TO INFORMATION SEARCH DEVICE

S303 RECEIVE/ACQUIRE SEARCH RESULTS

S304 MATCHED INFORMATION CONTAINED IN SEARCH RESULTS IS APPROPRIATE?  — YES

NO

S305 CORRECT SEARCH RESULTS

S307 IT IS ALREADY DETERMINED WHETHER MATCHED INFORMATION CONTAINED IN SEARCH RESULTS IS APPROPRIATE?

NO          YES

S308 STORE IDENTIFICATION INFORMATION SEARCHED BY USER

S309 SEND CORRECTED SEARCH RESULTS TO TERMINAL DEVICE

S310 RECEIVE/ACCEPT SELECTION COMMAND

S311 STORE IDENTIFICATION INFORMATION SELECTED BY USER

S312 EXECUTE PROCESSING FOR IDENTIFICATION INFORMATION

22

## FIG. 6

EP 2 608 064 A1

```
BROWSER                                                              ▭▣☒

611 ─  ⬅ ➡   URL OF INFORMATION PROVISION DEVICE                    ↻  ☒
612 ─

       QUERY: 50 TIMES                              604

       SEARCH RESULTS 4                                              607

608a                50 TIMES 50 TIMES 50 TIMES 50 TIMES 50 TIMES 50 TIMES 50 TIMES 50 TIMES 50 TIMES
609a   PRODUCT A    50 TIMES 50 TIMES 50 TIMES 50 TIMES 50 TIMES 50 TIMES 50 TIMES 50 TIMES 50 TIMES    610a
                    50 TIMES 50 TIMES 50 TIMES 50 TIMES 50 TIMES!

608b                50 TIMES HIGHER PERFORMANCE COMPARED WITH CONVENTIONAL PRODUCTS!
609b   PRODUCT B    50 TIMES MORE DURABLE AND MORE SAVING! IN ADDITION, NOW YOU GET 50 TIMES    610b
                    MORE POINTS!

608c                TRY THIS PRODUCT THAT CONTAINS 50 TIMES MORE ACTIVE INGREDIENT YYY
609c   PRODUCT C    THAN SIMILAR PRODUCTS! WE OFFER 50 TIMES MORE POINTS IN LIMITED TIME!    610c

608d                POWERFUL ACTIVE INGREDIENT XXX GIVES UNPRECEDENTED EFFECT!
609d   PRODUCT D    50 TIMES MORE POINTS DURING CAMPAIGN FOR PAY BACK!    610d
```

CONVENTIONAL EXAMPLE

# FIG. 7

EP 2 608 064 A1

**BROWSER**

611 ← → URL OF INFORMATION PROVISION DEVICE ↻ ✕ 50 TIMES 🔍
612

601 602 606 603 605

QUERY: 50 TIMES —604

SEARCH RESULTS 3 —607

608b
609b **PRODUCT B** | 50 TIMES HIGHER PERFORMANCE COMPARED WITH CONVENTIONAL PRODUCTS! ...DURABLE AND MORE SAVING! IN ADDITION, NOW YOU GET ... POINTS! —610b

608c
609c **PRODUCT C** | TRY THIS PRODUCT THAT CONTAINS 50 TIMES MORE ACTIVE INGREDIENT YYY THAN SIMILAR PRODUCTS! WE OFFER ... POINTS IN LIMITED TIME! —610c

608d
609d **PRODUCT D** | POWERFUL ACTIVE INGREDIENT XXX GIVES UNPRECEDENTED EFFECT! 50 TIMES MORE POINTS DURING CAMPAIGN FOR PAY BACK! —610d

# FIG. 8

EP 2 608 064 A1

## INTERNATIONAL SEARCH REPORT

| International application No. |
| --- |
| PCT/JP2011/068524 |

A.  CLASSIFICATION OF SUBJECT MATTER
*G06F17/30*(2006.01)i, *G06Q30/00*(2006.01)i

According to International Patent Classification (IPC) or to both national classification and IPC

B.  FIELDS SEARCHED

Minimum documentation searched (classification system followed by classification symbols)
G06F17/30, G06Q30/00

Documentation searched other than minimum documentation to the extent that such documents are included in the fields searched
Jitsuyo Shinan Koho        1922-1996   Jitsuyo Shinan Toroku Koho    1996-2011
Kokai Jitsuyo Shinan Koho  1971-2011   Toroku Jitsuyo Shinan Koho    1994-2011

Electronic data base consulted during the international search (name of data base and, where practicable, search terms used)
JSTPlus(JDreamII)

C.  DOCUMENTS CONSIDERED TO BE RELEVANT

| Category* | Citation of document, with indication, where appropriate, of the relevant passages | Relevant to claim No. |
| --- | --- | --- |
| A | JP 2002-197113 A  (Canon Inc.),<br>12 July 2002 (12.07.2002),<br>entire text; all drawings<br>& US 2002/0087535 A1    & GB 26353 D<br>& GB 26353 D0            & EP 1207465 A2 | 1-15 |
| A | JP 2010-128928 A  (NTT Docomo Inc.),<br>10 June 2010 (10.06.2010),<br>entire text; all drawings<br>(Family: none) | 1-15 |
| A | WO 2009/114066 A1  (Yahoo! Inc.),<br>17 September 2009 (17.09.2009),<br>entire text; all drawings<br>& JP 2011-517492 A        & US 2009/0234834 A1<br>& EP 2266062 A           & AU 2009223819 A<br>& CN 101960455 A          & KR 10-2010-0114127 A | 1-15 |

☐   Further documents are listed in the continuation of Box C.        ☐   See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search<br>07 November, 2011 (07.11.11) | Date of mailing of the international search report<br>15 November, 2011 (15.11.11) |
| --- | --- |
| Name and mailing address of the ISA/<br>Japanese Patent Office | Authorized officer |
| Facsimile No. | Telephone No. |

Form PCT/ISA/210 (second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008250663 A
- JP 2007026456 A
- JP 2010185370 A